# EUROPEAN PATENT APPLICATION

(11) **EP 2 777 854 A1**
(43) Date of publication of application: **17.09.2014**
(21) Application number: 14000945.7
(22) Date of filing: 14.03.2014
(51) Int. Cl.: B23D 61/02

(54) **Circular saw blade with multiple mounting hole patterns**

(30) Priority: 15.03.2013 US 201361800433 P; 06.05.2013 US 201313887927
(71) Applicant: Irwin Industrial Tool Company, Huntersville, NC 28078 (US)
(72) Inventor: Hall, Kenneth, East Longmeadow, MA 01028 (US)
(74) Representative: Schmid, Nils T.F.

(57) **Abstract**

A circular saw blade (10) comprises a generally circular body (B) defining cutting teeth (CT) at a periphery thereof. First apertures (1) in the body define a first mounting hole pattern (MP1) for receiving mounting pins (PS) of a first circular saw machine defining a first mounting pin pattern thereof for mounting the circular saw blade (10) thereto. Second apertures (2) in the body (B) define a second mounting hole pattern (MP2) different than the first mounting hole pattern (MP1) for receiving mounting pins (PS) of a second circular saw machine defining a second mounting pin pattern thereof different than the first mounting pin pattern for mounting the circular saw blade (10) thereto. At least one of the first apertures (1) and at least one of the second apertures (2) are (i) at least one of (a) radially and (b) circumferentially displaced from each other; and (ii) at least one of (a) overlap and (b) are connected to each other.

## Description

### CROSS-REFERENCE TO RELATED APPLICATIONS

This patent application claims benefit under 35 U.S.C. § 119 to similarly-titled U.S. Provisional Patent Application No. 61/800,433, filed March 15, 2013, which is hereby incorporated by reference in its entirety as part of the present disclosure.

### FIELD OF THE INVENTION

The present invention relates to circular saw blades, and more particularly to circular saw blades configured to mount onto circular saw machines having different mounting patterns.

### BACKGROUND OF THE INVENTION

A circular saw blade is a disk shaped blade that has a cutting edge defining cutting elements about a periphery of the blade. A circular blade rotates at a high speed about a central axis thereof to cut through a work piece. Circular saw blades are mounted onto powered circular saw machines in order to achieve such high rotational speeds. To do so, a circular saw blade defines a central bore configured to mount onto an arbor of the circular saw machine, and a plurality of mounting holes configured to align with corresponding mounting holes or channels of the machine. A mounting plate having mounting pins projecting therefrom mounts onto the machine, such that the pins extend through the mounting holes of the blade and into the mounting channels of the machine, to, in turn, secure the blade to the machine or provide positive rotation.

While different circular saw machines often have the same arbor size, such machines can have different mounting channel configurations. Typically, the mounting holes of a circular saw blade collectively define a single mounting hole pattern, configured to align with a mounting channel configuration of a particular circular saw machine. Therefore, one issue often encountered by a consumer who has different saw machines is that he must purchase different blades for the different saw machines, even if the intended work piece remains the same. For example, a consumer may purchase a first circular saw blade configured for a cutting application, e.g., metal, wood, etc., defining a first mounting pattern for use with a first circular saw machine. Thereafter, should the consumer wish to utilize a second circular saw machine, the consumer is obligated to purchase a second blade configured for the same cutting application but defining the second mounting pattern.

One approach for addressing this problem has been to manufacture saw blades defining two different mounting hole patterns, for use with two different machines, such that the second pattern is radially and/or circumferentially offset from the first pattern. One drawback associated with this approach is encountered during the manufacturing process, where cutting of two different mounting hole patterns is required rather than one. Accordingly, manufacturing costs are increased, which are ultimately imparted onto the consumer. Yet another drawback associated with this approach is that generally only two different mounting hole patterns can be cut into one blade. This is due, in part, to the combination of the number of holes per mounting pattern (generally 4 holes per pattern) and the structural rigidity requirements of the blade, thereby dictating the number of different holes that can be punched/cut into a blade.

### SUMMARY OF THE INVENTION

It is an object of the present invention to overcome one or more of the above-described drawbacks and/or disadvantages.

In accordance with a first aspect, a circular saw blade comprises a circular saw blade body defining a plurality of cutting teeth at a periphery thereof; a plurality of first apertures in the body defining a first mounting hole pattern configured to receive a plurality of mounting pins of a circular saw machine defining a first mounting pin pattern thereof for mounting the circular saw blade to said circular saw machine defining the first mounting pin pattern; and a plurality of second apertures in the body defining a second mounting hole pattern different than the first mounting hole pattern configured to receive a plurality of mounting pins of a circular saw machine defining a second mounting pin pattern thereof different than the first mounting pin pattern for mounting the circular saw blade to said circular saw machine defining the second mounting pin pattern. At least one of the first apertures and at least one of the second apertures are (i) at least one of (a) radially and (b) circumferentially displaced from each other; and (ii) at least one of (a) overlap and (b) are connected to each other.

In some embodiments, each of the plurality of first apertures is (i) at least one of (a) radially and (b) circumferentially displaced from a respective second aperture; and (ii) at least one of (a) overlap and (b) are connected to said aperture.

In some embodiments, said at least one of the first apertures and at least one of the second apertures form a contiguous slot. In some such embodiments, the contiguous slot extends at least partially in at least one of (i) a radial direction and (ii) a circumferential direction.

In some embodiments, at least about 90° of a circumference of the at least one first aperture at least one of (i) overlaps with and (ii) is connected to at least about 90° of a circumference of the at least one second aperture. In some such embodiments, between about 90° and about 180° of the circumference of the at least one first aperture at least one of (i) overlaps and (ii) connects with the at least one second aperture. In other such embodiments, about 180° of the circumference of the at least one first aperture at least one of (i) overlaps and (ii) connects with about 180° of the circumference of the at least one second aperture.

In some embodiments, the circular saw blade further comprises a plurality of third apertures in the body defining a third mounting hole pattern configured to receive a plurality of mounting pins of a circular saw machine defining a third mounting pin pattern thereof for mounting the circular saw blade to said circular saw machine. The third apertures are at least one of (a) radially and (b) circumferentially displaced from the first and second apertures, and do not overlap or connect with said first and second apertures. In some such embodiments, the circular saw blade further comprises a plurality of fourth apertures in the body defining a fourth mounting hole pattern configured to receive a plurality of mounting pins of a circular saw machine defining a fourth mounting pin pattern thereof for mounting the circular saw blade to said circular saw machine. The fourth apertures are at least one of (a) radially and (b) circumferentially displaced from the first and second apertures, and do not overlap or connect with said first and second apertures, and at least one of the third apertures and at least one of the fourth apertures are (i) at least one of (a) radially and (b) circumferentially displaced from each other; and (ii) at least one of (a) overlap and (b) are connected to each other.

In accordance with another aspect, a circular saw blade comprises a circular saw blade body defining first means for cutting at a periphery thereof; the blade body having a plurality of second means for receiving a plurality of mounting pins of a circular saw machine defining a first mounting pin pattern thereof for mounting the circular saw blade to said circular saw machine defining the first mounting pin pattern. The blade body further has a plurality of third means for receiving a plurality of mounting pins of a circular saw machine defining a second mounting pin pattern thereof different than the first mounting pin pattern for mounting the circular saw blade to said circular saw machine defining the second mounting pin pattern. At least one of the second means and at least one of the third means are (i) at least one of (a) radially and (b) circumferentially displaced from each other; and (ii) at least one of (a) overlap and (b) are connected to each other.

In some embodiments, the first means comprises a plurality of cutting teeth, the second means comprises a first aperture, said plurality of second means defining a first mounting hole pattern, and the third means comprises a second aperture, said plurality of third means defining a second mounting hole pattern different than the first mounting hole pattern.

In accordance with another aspect, A method of manufacturing a circular saw blade comprises the steps of:
(i) cutting a substantially circular blade body from a metal blank;
(ii) providing a cutting edge along the a periphery of the blade body defined by a plurality of cutting teeth;
(iii) providing the blade body with a plurality of first apertures defining a first mounting hole pattern configured to receive a plurality of mounting pins of a circular saw machine defining a first mounting pin pattern thereof for mounting the circular saw blade to said circular saw machine defining the first mounting pin pattern; and
(iv) providing the blade body with a plurality of second apertures defining a second mounting hole pattern different than the first mounting hole pattern and configured to receive a plurality of mounting pins of a circular saw machine defining a second mounting pin pattern thereof different than the first mounting pin pattern for mounting the circular saw blade to said circular saw machine defining the second mounting pin pattern.

The steps of providing the a plurality of first and second apertures include providing at least one of the first apertures and at least one of the second apertures (i) at least one of (a) radially and (b) circumferentially displaced from each other; and (ii) at least one of (a) overlapping and (b) connecting with each other.

In some embodiments, the steps of providing a plurality of first apertures and a plurality of second apertures include at least one of laser cutting, water jet cutting and punching. In some embodiments, the step of providing a cutting edge includes at least one of milling and punching. In some embodiments, the steps of providing a plurality of first and second apertures comprise providing the blade body with a plurality of contiguous slots each defined by a first aperture at least one of (a) overlapping and (b) connecting with a second aperture. In some such embodiments, the step of providing the blade body with a plurality of contiguous slots comprises at least one of (i) overlapping and (ii) connecting at least about 90° of a circumference of the first aperture with at least about 90° of a circumference of the second aperture.
A circular saw blade comprises a generally circular body defining cutting teeth at a periphery thereof. First apertures in the body define a first mounting hole pattern for receiving mounting pins of a first circular saw machine defining a first mounting pin pattern thereof for mounting the circular saw blade thereto. Second apertures in the body define a second mounting hole pattern different than the first mounting hole pattern for receiving mounting pins of a second circular saw machine defining a second mounting pin pattern thereof different than the first mounting pin pattern for mounting the circular saw blade thereto. At least one of the first apertures and at least one of the second apertures are (i) at least one of (a) radially and (b) circumferentially displaced from each other; and (ii) at least one of (a) overlap and (b) are connected to each other.

Objects and advantages of the present invention, and/or of the currently preferred embodiments thereof, will become more readily apparent in view of the following detailed description of the currently preferred embodiments and accompanying drawings.

### BRIEF DESCRIPTION OF THE DRAWINGS

FIG. 1 is a perspective view of a circular saw blade mounted onto a circular saw machine, prior to mounting thereon of a mounting plate;
FIG. 2 is another perspective view of the circular saw blade of FIG. 1 mounted onto a circular and a mounting plate to be mounted thereon;
FIG. 3 is a perspective view of the circular saw blade of FIG. 1, with the mounting plate mounted thereon to secure the blade to the machine;
FIG. 4A is a schematic illustration of three mounting hole patterns, and FIG. 4B is a template illustrating a mounting slot combining two of the patterns and the third pattern on a single circular saw blade;
FIG. 5A is a schematic illustration of two mounting hole patterns, and FIG. 5B is a template illustrating a mounting slot pattern combining two of the mounting holes of one pattern with the second mounting hole pattern on a single blade;
FIG. 6A is a schematic illustration of another two mounting hole patterns, and FIG. 6B is a template illustrating a mounting slot pattern combining the two mounting hole patterns on a single blade;
FIG. 7A is a schematic illustration of five mounting hole patterns, and FIG. 7B is a template illustrating three mounting slot patterns combining the 5 mounting hole patterns in a single blade;
FIG. 8A is a schematic illustration of two mounting hole patterns, and FIG. 8B is a template illustrating a mounting slot pattern combining the two mounting holes patterns on a single blade;
FIG. 9A is a schematic illustration of two mounting hole patterns, and FIG. 9B is a template illustrating how the individual mounting hole patterns would appear on a single blade; and
FIG. 10A is a schematic illustration of another two mounting hole patterns, and FIG. 10B is a template illustrating how the individual mounting hole patterns would appear on a single blade.

### DETAILED DESCRIPTION OF EMBODIMENTS OF THE INVENTION

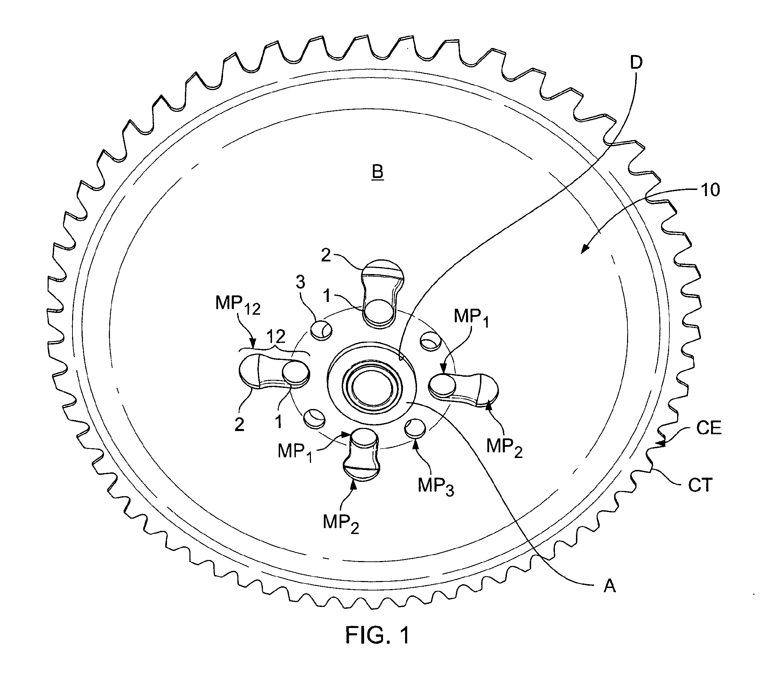

In FIG. 1, a circular saw blade is indicated generally by the reference numeral 10. The blade 10 includes a blade body B, and a cutting edge CE extending about the periphery thereof. A plurality of cutting elements CT define the cutting edge CE. In the illustrated embodiment, the cutting elements CT are cutting teeth. However, as should be understood by those of ordinary skill in the pertinent art, the cutting elements can take the form of other cutting elements, such as, for example, an abrasive surface or grit.

The blade B includes a central bore D. The central bore D is dimensioned to fittingly receive an arbor A of a circular saw machine therethrough when mounting the saw blade 10 onto the circular saw machine. The blade body B further includes a plurality of circumferentially/angularly offset mounting holes, e.g., 1, 2, 3, and/or mounting slots, e.g., 12, as described further below. Each set of mounting holes and/or each set of mounting slots, collectively defines at least one mounting pattern. Generally, mounting hole patterns include two or four holes. As should be understood by those of ordinary skill in the pertinent art, a mounting hole pattern configuration is designated in the industry by "a/b/c", where "a" is the number of holes in the pattern, "b" is the hole diameter (generally in mm), and "c" is the distance between diametrically opposed holes, e.g., diameter of the pattern (generally in mm).

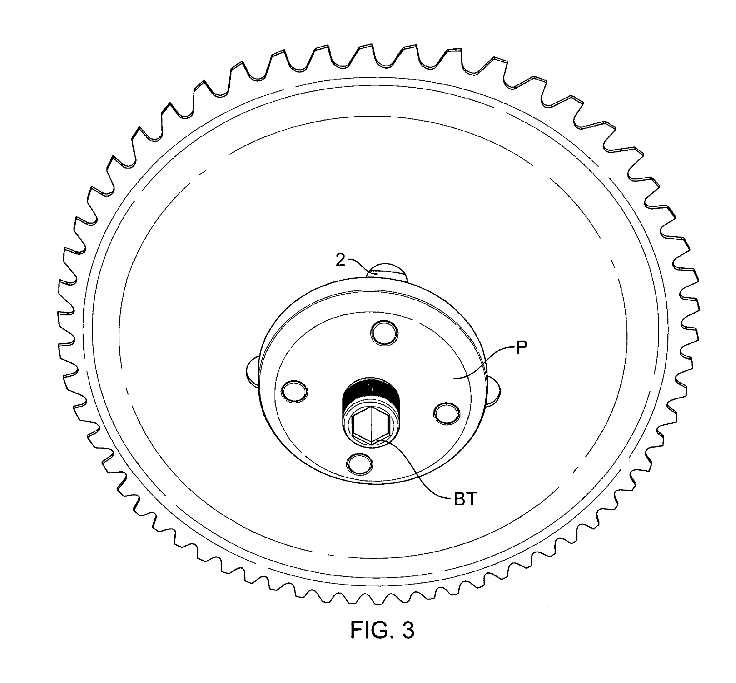

As shown in FIGS. 1 and 3, a blade 10 is mounted onto a circular saw machine by mounting the bore D onto an arbor A of the machine. The blade 10 is then rotated to align the mounting holes of the blade 10 with corresponding mounting channels S of the machine. The mounting holes of the blade 10 must have the same a/b/c pattern as the mounting channels S of the machine. Thereafter, a mounting plate P is mounted onto the arbor A of the machine (FIG. 3) and mounting pins PS projecting therefrom, having the same a/b/c mounting pattern as the mounting channels S, extend through the mounting holes of the blade 10 and into the mounting channels S of the machine. The mounting plate P is thereafter secured to the arbor A (FIG. 3), such as with a bolt BT.

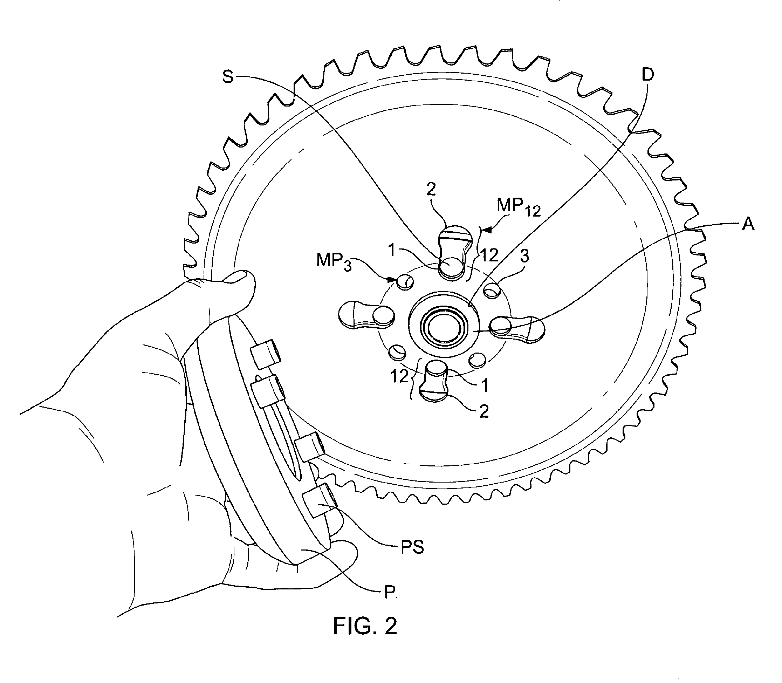

As shown in FIGS. 1 and 2, the blade 10 includes two mounting hole patterns, MP₁ and MP₂. MP₁ comprises four mounting holes 1. MP₂ comprises four mounting holes 2 having a different a/b/c configuration than the mounting holes 1. The mounting patterns MP₁ and MP₂ are oriented on the blade 10 such that at least one of the mounting holes 1 partially overlaps with, or is otherwise connected to, at least one of the mounting holes 2, respectively, to form a single contiguous slot 12. The slot 12 is configured, i.e., shaped and dimensioned, such that a portion of the slot defining the mounting hole 1 can align with the mounting channels of a first circular saw machine having a corresponding first mounting channel configuration, and a second portion of the slot defining the mounting hole 2 can align with the mounting channels of a second circular saw machine having a second mounting channel configuration. The slot 12 is also shaped and dimensioned to securely receive the required mounting pins PS for the respective mounting plate of the machine.

In the illustrated embodiment, each of the four mounting holes 2 of the second mounting pattern MP₂ is connected to a respective mounting hole 1 of the first mounting pattern MP₁, thereby forming four slots 12. The four slots 12 thus define a single mounting slot pattern MP₁₂ configured to align both with mounting channels having an a/b/c configuration as that of the mounting pattern MP₁ as well as mounting channels having an a/b/c configuration as that of the mounting pattern MP₂. As shown in FIG 2, for example, the blade 10 is placed on the circular saw machine having a mounting slot pattern MP1, such that mounting holes 1 align with the mounting channels S of the machine. As can be seen best in FIG. 3, the mounting holes 2 are not engaged by the mounting pins PS of the mounting plate P.

In some embodiments, at least about 90° of the circumference of a mounting hole 1 overlaps with, or is connected to, at least about 90° of the circumference of a mounting hole 2. In some such embodiments, up to about at least 180° of a mounting hole 1 overlaps with, or is connected to, up to about at least 180° of a mounting hole 2. In other such embodiments, more than about 180° of a mounting hole 1 overlaps with, or is connected to, more than about 180° of a mounting hole 2.

In the illustrated embodiment, as shown in FIGS. 1 and 2, the blade 10 is compatible with, i.e., can align with, three different mounting patterns. That is, the blade 10 can be secured to a circular saw machine having any one of these three different mounting patterns. As explained above, the slots 12 are compatible with two different mounting patterns. A third mounting pattern MP₃, defined by the four holes 3, is circumferentially offset from the slots 12, The blade 10 can be circumferentially rotated to align the holes 3 with the mounting channels S of the compatible machine. It should be noted that the mounting holes 3 can further be radially offset from the slots 12, or either of the holes 1 and 2. In other embodiments, the holes 3 can be replaced by a second set of slots that is compatible with 2 mounting patterns, resulting in a blade 10 compatible with four different mounting patterns. In yet other embodiment, a blade 10 can include three set of slots and is compatible with more than four mounting patterns. The blade can include any amount of desired mounting patterns.

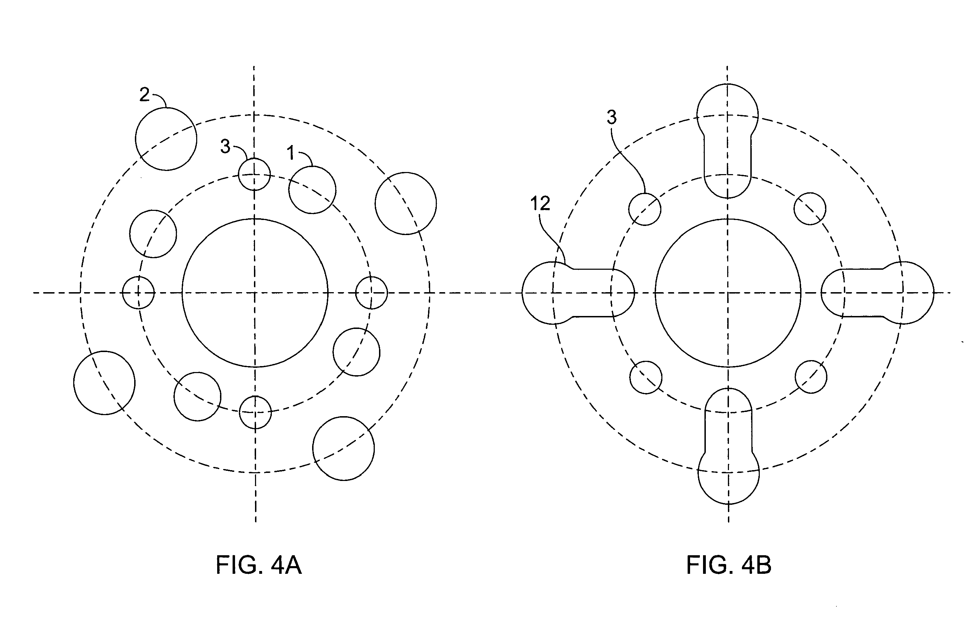

FIGS. 4-10 illustrate several examples of how mounting holes of different mounting hole patterns can be combined, e.g., connect and/or at least partially overlap, according to the invention. The mounting slot patterns are cut into a single blade for mounting capability onto different circular saw machines having different mounting channel patterns. FIG. 4B, for example, illustrates a template for the blade 10 of FIGS. 1-3. FIG. 4A shows three different individual mounting patterns, 4/16/80 (MP₁), 4/21/120 (MP₂), and 4/11/80 (MP₃). In the template of FIG. 4B the holes 1 and the holes 2 are radially offset from each other but connected to form the slots 12, circumferentially offset from the holes 3, as explained above.

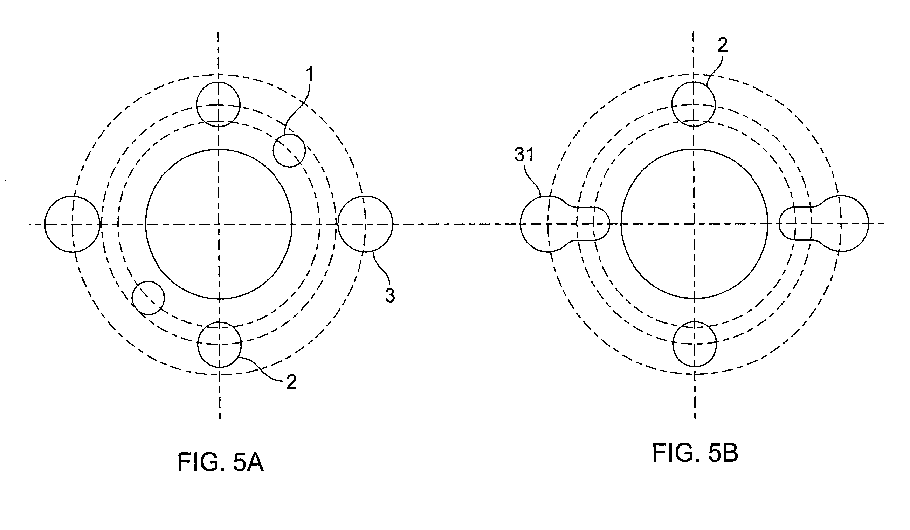

FIG. 5A illustrates two individual mounting patterns. The first pattern, having two holes 1, defines a 2/9/55 configuration. The second pattern, having holes 2 and 3, defines a 2/12/65 configuration for holes 2 and a 2/15/80 configuration for holes 3. In the template of FIG. 5B, mounting holes 3 of the second pattern and mounting holes 1 of the first pattern are connected to form slots 31, circumferentially offset from mounting holes 2 of the second pattern.

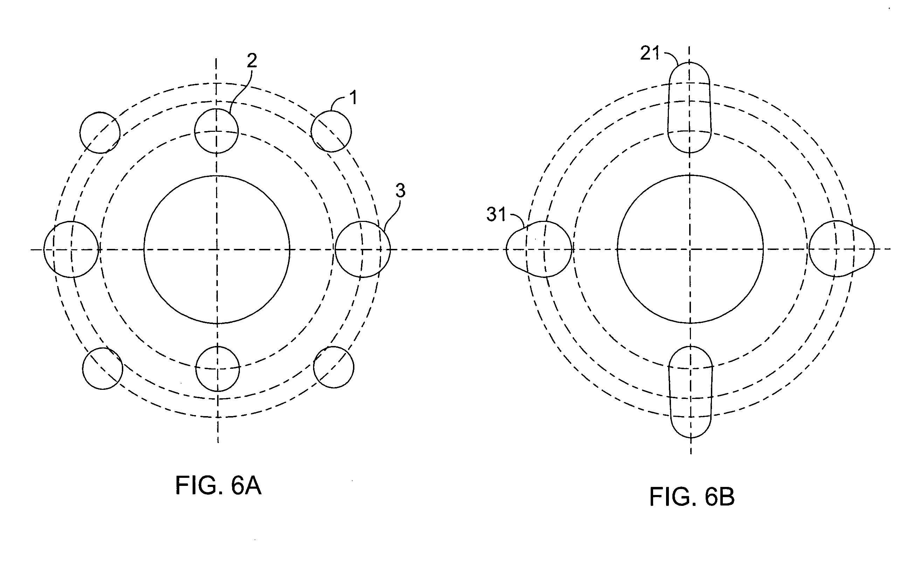

In FIG. 6A, a first pattern, having four holes 1, defines a 4/11/90 configuration. A second pattern, having holes 2 and 3, defines a 2/12/65 configuration for holes 2 and a 2/15/80 configuration for holes 3, as shown previously in FIG. 5A. In the template of FIG. 6B, the mounting holes 2 of the second pattern are radially offset but connected with two of the holes 1 of the first pattern to form mounting slots 21, and the mounting holes 3 of the second pattern are partially overlapped with the other two of the holes 1 of the first pattern to form mounting slots 31. Thus, mounting slots 31 and 21 together are compatible with either of the two mounting patterns.

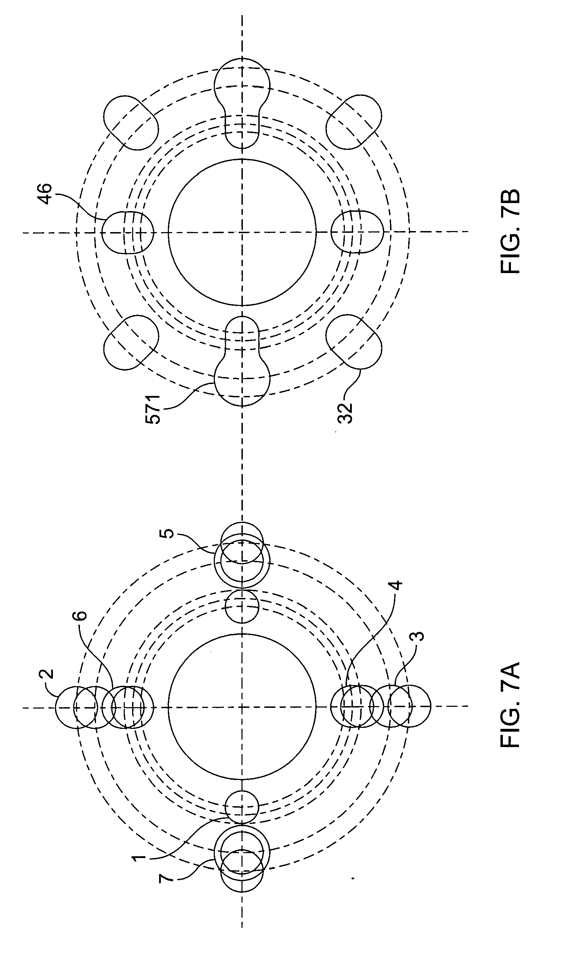

In FIG. 7A, a first pattern, having two holes 1, defines a 2/9/55 configuration. A second pattern having four holes 2, defines a 4/11/90 configuration. A third pattern, having four holes 3, defines a 4/11/80 configuration. A fourth pattern, having two holes 4 and two holes 5, defines a 2/12/65 configuration for holes 4 and a 2/15/80 configuration for holes 5. A fifth pattern, having holes 6 and 7, defines a 2/12/65 configuration for holes 6 and a 2/15/80 configuration for holes 7. The mounting holes 5 and 7, both having a 2/15/80 configuration, are overlapping. In the template of FIG. 7B, the mounting holes 1 are connected with the mounting holes 5 and 7, to form slots 571. The mounting holes 2 are partially overlapped with the mounting holes 3, to form slots 32. The mounting holes 4 are partially overlapped with the mounting holes 6, to form slot 46. Thus, the blade is compatible five different mounting patterns.

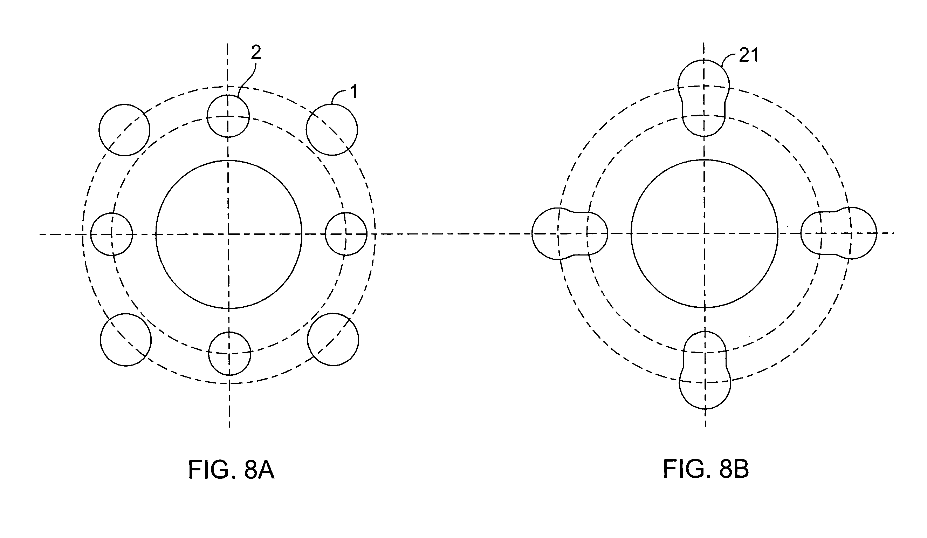

In FIG. 8A, a first pattern, having four holes 1, defines a 4/11/63 configuration. A second pattern, also having four holes 2, defines a 4/9/50 configuration. In the template of FIG. 8B, the mounting holes 1 are partially overlapped with the mounting holes 2, to form the mounting slots 21.

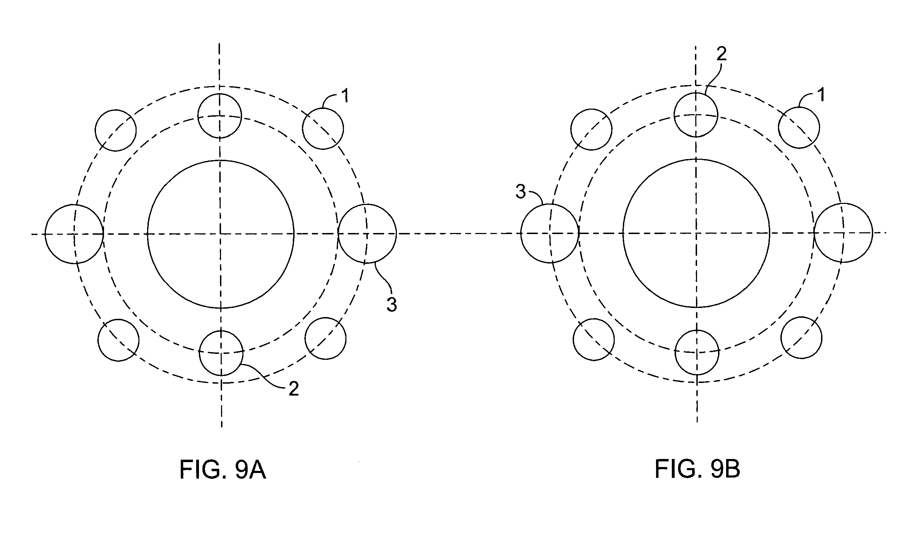

In FIG. 9A, a first pattern, having four holes 1, defines a 4/11/80 configuration. A second pattern, having two holes 2 and two holes 3, defines a 2/12/65 configuration for holes 2 and a 2/15/80 configuration for holes 3. The holes 2 are radially offset from the other holes 1, 3. The template of FIG. 9B shows how the individual mounting hole patterns can appear on a single blade without overlapping of patterns.

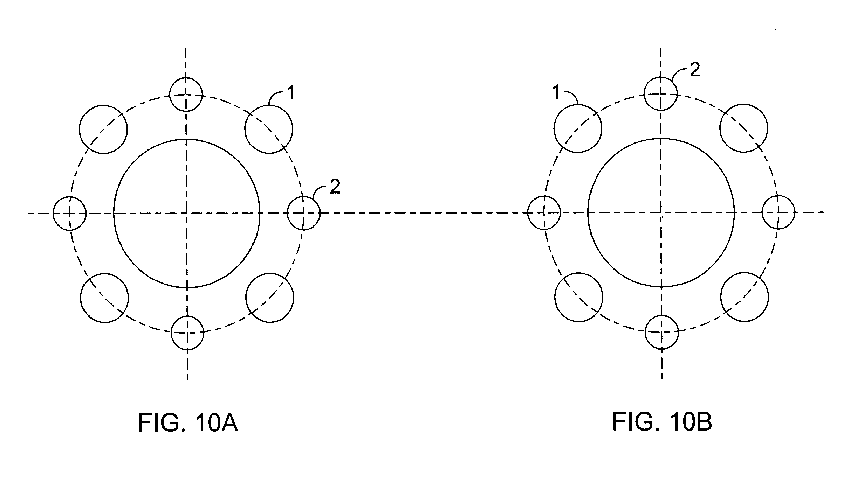

In FIG. 10A, a first pattern, having four holes 1, defines a 4/16/80 configuration. A second pattern, also having four holes 2, defines a 4/11/80 configuration. None of the holes in this embodiment is radially offset from each other. The template of FIG. 10B shows how the individual mounting hole patterns can appear on a single blade without overlapping of patterns.

Although in the above-described embodiments the various hole mounting patterns that are overlapped/connected are radially offset from each other, hole mounting patterns that are at the same radius can also be overlapped/connected by slightly circumferentially offsetting them so that they overlap. Such would form slots that extend in the circumferential direction. Further, three or more mounting patterns can overlap so that the hole patterns are both radially and circumferentially overlapped. Thus, the formed slots can resemble T-shapes, L-shapes, cross-shapes (+), etc. In yet other embodiments having two mounting hole patterns that are radially offset, rather than merely circumferentially aligning the pattern, e.g., forming a radially-extending slot, the patterns can also be slightly circumferentially offset, so as to overlap in both radial and circumferential directions, e.g., a slot in the shape of an obtuse angle.

As should be understood by those of ordinary skill in the pertinent art, circular blades 10 are manufactured by cutting the blade out of a metal sheet, such as, for example, a steel blade. The blade body B can be cut out of a sheet via, for example, laser cutting, punching, water jet, etc. Thereafter the mounting slots and/or mounting holes are cut out of the blade body B in similar manner, e.g., laser, punching, water jet. The periphery of the blade body is machined to form the cutting edge, e.g., milled or punched, or by laser, water jet, or ground in blade body. In some embodiments, the cutting elements defining the cutting edge are formed without a tip but instead are formed with a "seat" or "pocket," at the top of the cutting element, i.e., a surface at the top of the cutting element for receiving a tip, which may be done in accordance with methods known by those of ordinary skill in the pertinent art. Thereafter, tips, which may contain another material than that of the blade body, e.g., carbide or cermet, are joined, e.g., welded, brazed, etc., onto those cutting elements, e.g., into the seats or pockets, which may be done in accordance with methods known by those of ordinary skill in the pertinent art.

One advantage associated with the above-described blade configuration is an increased efficiency, and thus productivity, in circular saw blade manufacturing. This is due to that fewer total mounting slots can be formed to achieve a blade compatible with multiple mounting patterns, compared to known blades where the mounting holes for each pattern are individually or separately formed from the holes of other patterns. That is, because two or more holes are formed into a single slot, instead of making a separate cut for each hole, only one total cut (albeit not round) need be made. This decreases cost and time to make the blade. Another advantage associated with the above-described blade configuration is that a blade can be manufactured to be compatible with more mounting patterns than when each mounting pattern is defined by individual mounting holes. Fewer different blades need to be manufactured. This also results in cost savings and convenience to users who have multiple saw machines with different mounting hole patterns.

As may be recognized by those of ordinary skill in the pertinent art based on the teachings herein, numerous changes and modifications may be made to the above-described and other embodiments of the present invention without departing from the scope of the invention as defined in the appended claims. Accordingly, this detailed description of embodiments is to be taken in an illustrative, as opposed to a limiting sense.
The features disclosed in the description, the figures and the claims can be significant for realizing the invention in its different embodiments separately or in any combination.

### LIST OF REFERENCE NUMERALS

- 10: circular saw blade
- B: blade body
- CE: cutting edge
- CT: cutting elements
- D: central bore
- A: arbor
- 1, 2, 3: mounting hole
- 12, 21, 31, 571, 32, 46: slot
- S: mounting channel
- P: mounting plate
- PS: mounting pins
- MP₁, MP₂, MP₃, MP₁₂: mounting pattern
- BT: bolt

## Claims

1. A circular saw blade (10) comprising:
a circular saw blade (B) body defining a plurality of cutting teeth at a periphery thereof;
a plurality of first apertures in the body (B) defining a first mounting hole pattern configured to receive a plurality of mounting pins (PS) of a first circular saw machine defining a first mounting pin pattern thereof for mounting the circular saw blade (10) to said first circular saw machine; and
a plurality of second apertures in the body (B) defining a second mounting hole pattern different than the first mounting hole pattern configured to receive a plurality of mounting pins of a second circular saw machine defining a second mounting pin pattern thereof different than the first mounting pin pattern for mounting the circular saw blade (10) to said second circular saw machine;
wherein at least one of the first apertures and at least one of the second apertures are (i) at least one of (a) radially and (b) circumferentially displaced from each other; and (ii) at least one of (a) overlap and (b) are connected to each other.

2. A circular saw blade (10) as defined in claim 1, wherein each of the plurality of first apertures is (i) at least one of (a) radially and (b) circumferentially displaced from a respective second aperture; and (ii) at least one of (a) overlap and (b) are connected to said aperture.

3. A circular saw blade (10) as defined in claim 1 or 2, wherein said at least one of the first apertures and at least one of the second apertures form a contiguous slot (12, 21, 31, 32, 46, 571), wherein the particularly contiguous slot (12, 21, 31, 32, 46, 571) extends at least partially in at least one of (i) a radial direction and (ii) a circumferential direction.

4. A circular saw blade (10) as defined in one of the preceding claims, wherein at least about 90° of a circumference of the at least one first aperture at least one of (i) overlaps with and (ii) is connected to at least about 90° of a circumference of the at least one second aperture.

5. A circular saw blade (10) as defined in claim 4, wherein between about 90° and about 180° of the circumference of the at least one first aperture at least one of (i) overlaps and (ii) connects with the at least one second aperture.

6. A circular saw blade (10) as defined in claim 4 or 5, wherein about 180° of the circumference of the at least one first aperture at least one of (i) overlaps and (ii) connects with about 180° of the circumference of the at least one second aperture.

7. A circular saw blade (10) as defined in one of the preceding claims, further comprising a plurality of third apertures in the body (B) defining a third mounting hole pattern configured to receive a plurality of mounting pins of a third circular saw machine defining a third mounting pin pattern thereof for mounting the circular saw blade (10) to said third circular saw machine, wherein the third apertures are at least one of (a) radially and (b) circumferentially displaced from the first and second apertures, and do not overlap or connect with said first and second apertures.

8. A circular saw blade (10) as defined in claim 7, further comprising a plurality of fourth apertures in the body (B) defining a fourth mounting hole pattern configured to receive a plurality of mounting pins of a fourth circular saw machine defining a fourth mounting pin pattern thereof for mounting the circular saw blade (10) to said fourth circular saw machine, wherein:
the fourth apertures are at least one of (a) radially and (b) circumferentially displaced from the first and second apertures, and do not overlap or connect with said first and second apertures, and
at least one of the third apertures and at least one of the fourth apertures are (i) at least one of (a) radially and (b) circumferentially displaced from each other; and (ii) at least one of (a) overlap and (b) are connected to each other.

9. A circular saw blade (10) particularly according to one of the preceding claims, comprising:
a circular saw blade body (B) defining first means for cutting at a periphery thereof;
the blade body (B) having a plurality of second means for receiving a plurality of mounting pins (PS) of a first circular saw machine defining a first mounting pin pattern thereof for mounting the circular saw blade (10) to said first circular saw machine; and
the blade body (B) further having a plurality of third means for receiving a plurality of mounting pins of a second circular saw machine defining a second mounting pin pattern thereof different than the first mounting pin pattern for mounting the circular saw blade (10) to said second circular saw machine;
wherein at least one of the second means and at least one of the third means are (i) at least one of (a) radially and (b) circumferentially displaced from each other; and (ii) at least one of (a) overlap and (b) are connected to each other.

10. A circular saw blade (10) as defined in claim 9, wherein the first means comprises a plurality of cutting teeth, the second means comprises a first aperture, said plurality of second means defining a first mounting hole pattern, and the third means comprises a second aperture, said plurality of third means defining a second mounting hole pattern different than the first mounting hole pattern.

11. A method of manufacturing a circular saw blade (10) comprising the steps of:
cutting a substantially circular blade body (B) from a metal blank;
providing a cutting edge (CE) along the a periphery of the blade body (B) defined by a plurality of cutting teeth;
providing the blade body (B) with a plurality of first apertures defining a first mounting hole pattern configured to receive a plurality of mounting pins (PS) of a first circular saw machine defining a first mounting pin pattern thereof for mounting the circular saw blade (10) to said first circular saw machine; and
providing the blade body (B) with a plurality of second apertures defining a second mounting hole pattern different than the first mounting hole pattern and configured to receive a plurality of mounting pins of a second circular saw machine defining a second mounting pin pattern thereof different than the first mounting pin pattern for mounting the circular saw blade (10) to said second circular saw machine;
wherein the steps of providing the a plurality of first and second apertures include providing at least one of the first apertures and at least one of the second apertures (i) at least one of (a) radially and (b) circumferentially displaced from each other; and (ii) at least one of (a) overlapping and (b) connecting with each other.

12. A method as defined in claim 11, wherein the steps of providing a plurality of first apertures and a plurality of second apertures include at least one of laser cutting, water jet cutting and punching.

13. A method as defined in claim 11 or 12, wherein the step of providing a cutting edge (CE) includes machining said cutting edge (CE).

14. A method as defined in of the claims 11 to 13, wherein the steps of providing a plurality of first and second apertures comprise providing the blade body (B) with a plurality of contiguous slots each defined by a first aperture at least one of (a) overlapping and (b) connecting with a second aperture.

15. A method as defined in one of the claims 11 to 14, wherein the step of providing the blade body (B) with a plurality of contiguous slots (12, 21, 31, 32, 46, 571) comprises at least one of (i) overlapping and (ii) connecting at least about 90° of a circumference of the first aperture with at least about 90° of a circumference of the second aperture.
